# EUROPEAN PATENT SPECIFICATION

(11) **EP 3 339 473 B1**
(45) Date of publication and mention of the grant of the patent: **01.07.2020**
(21) Application number: 17199551.7
(22) Date of filing: 01.11.2017
(51) Int. Cl.: C23C 24/04, B29C 64/153

(54) **MODULAR TOOLING FOR A DEPOSITED STRUCTURE**
MODULARES WERKZEUG FÜR EINE AUFGEBRACHTE STRUKTUR
OUTILLAGE MODULAIRE POUR UNE STRUCTURE DÉPOSÉE

(30) Priority: 22.12.2016 US 201615388286
(43) Date of publication of application: 27.06.2018
(73) Proprietor: United Technologies Corporation, Farmington, CT 06032 (US)
(72) Inventor: ROBERGE, Gary D., Tolland, CT 06084 (US); BRINDLEY, William J., Hebron, CT 06248 (US)
(74) Representative: Dehns

(56) References cited:
- EP-A1- 0 911 426
- WO-A1-2011/042090
- DE-A1-102014 206 073
- US-A1- 2014 356 219
- US-B1- 6 527 038

## Description

### FIELD

The present disclosure is directed to a system and a method for creation of a metallic structure for use in an aircraft using a cold-spray technique by forming a modular tool having a formation surface for receiving deposited material.

### BACKGROUND

Gas turbine engines include multiple components, a portion of which are formed as sheet structures. These sheet structures are currently hot or cold formed using dies. The dies include a relatively durable material that is capable of withstanding the temperature, pressure, and other loads applied to the die via the selected forming operation. The material used in the dies may be relatively expensive. Furthermore, formation of dies is a relatively time-consuming and expensive process. The time and expense of forming the dies increases as the complexity, such as complex contours and size, of the desired part increases.

DE 10 2014 206 073 discloses a method of producing a hollow body by means of cold gas spraying.

WO 2011/042090 discloses a method and device for producing a moulded part by means of generative application. US 6 527 038 B1 discloses providing cooling channels in tooling for use in casting, stamping and/or molding.

### SUMMARY

Disclosed herein is a method for forming a sheet structure as claimed in claim 1. Any of the foregoing embodiments may also include coupling each of the plurality of tool portions together to resist separation of any of the plurality of tool portions in response to deposition of the at least one layer of material.

In any of the foregoing embodiments, coupling each of the plurality of tool portions together includes coupling each of the plurality of tool portions together using interlocking features of the plurality of tool portions.

In any of the foregoing embodiments, the interlocking features include dovetail features.

In any of the foregoing embodiments, at least one of the tool portions includes a first material and has a pocket having a second material that is different than the first material.

In any of the foregoing embodiments, the different material of the pocket has a compressive yield strength that is greater than that of a material of the remaining portion of the at least one tool portion.

In any of the foregoing embodiments, depositing at least one layer of material on the main formation surface includes controlling a cold-spray gun to rotate to deposit the at least one layer of material at an angle that is substantially perpendicular to a location on which the at least one layer of material is being deposited.

Also disclosed is a system for forming a sheet structure as claimed in claim 6.

In any of the foregoing embodiments, each of the plurality of tool portions is configured to be coupled together to resist separation of any of the plurality of tool portions in response to deposition of the material.

In any of the foregoing embodiments, each of the plurality of tool portions includes an interlocking feature usable to couple each of the plurality of tool portions together.

In any of the foregoing embodiments, the interlocking feature includes a dovetail feature.

In any of the foregoing embodiments, at least one of the plurality of tool portions includes a pocket having a different material than a remaining portion of the at least one tool portion.

In any of the foregoing embodiments, the different material of the pocket has a compressive yield strength that is greater than that of the material of the remaining portion of the at least one tool portion.

In any of the foregoing embodiments, the cold-spray gun is configured to rotate to output the gas at an angle that is substantially perpendicular to a location on the main formation surface onto which the gas is output.

Also disclosed is a main tool for use in forming a sheet structure using a cold-spray technique as claimed in claim 12. In any of the foregoing embodiments, the first interlocking feature and the second interlocking feature each include a dovetail feature.

In any of the foregoing embodiments, at least one of the first tool portion or the second tool portion includes a pocket having a different material than a remaining portion of the at least one of the first tool portion or the second tool portion.

The foregoing features and elements may be combined in various combinations without exclusivity, unless expressly indicated otherwise. These features and elements as well as the operation thereof will become more apparent in light of the following description and the accompanying drawings. It should be understood, however, the following description and drawings are intended to be exemplary in nature and non-limiting.

### BRIEF DESCRIPTION OF THE DRAWINGS

Various features will become apparent to those skilled in the art from the following detailed description of the disclosed, non-limiting, embodiments. The drawings that accompany the detailed description can be briefly described as follows:
FIG. 1 is a schematic cross-section of a gas turbine engine, in accordance with various embodiments;
FIG. 2 is a flowchart illustrating a method for forming a sheet structure usable in the gas turbine engine of FIG. 1 using a cold-spray technique, in accordance with various embodiments;
FIG. 3 is a block diagram illustrating a system for forming a sheet structure using a cold-spray technique, in accordance with various embodiments;
FIG. 4A is a drawing of a tool used for forming a sheet structure using a cold-spray technique, in accordance with various embodiments;
FIG. 4B is a drawing of the tool of FIG. 4A having an interface coating for receiving a cold-spray deposit, in accordance with various embodiments;
FIG. 4C is a drawing of a sheet structure using the tool and interface coating of FIG. 4B, in accordance with various embodiments;
FIG. 5A is a drawing of a tool having a recess in a formation surface for forming a sheet structure with a feature having a greater thickness relative to other portions of the sheet structure, in accordance with various embodiments;
FIG. 5B is a drawing of the sheet structure with the feature formed using the tool of FIG. 5A, in accordance with various embodiments;
FIG. 6 is a flowchart illustrating a method for forming a sheet structure using a modular tool having a plurality of tool portions, in accordance with various embodiments;
FIG. 7 is a drawing illustrating a main tool having a plurality of tool portions for use in forming a sheet structure using a cold spray technique, in accordance with various embodiments;
FIGS. 8A and 8B are drawings illustrating components of a main tool having a plurality of tool portions with interlocking features and cooling channels, in accordance with claim 12 and
FIGS. 9A and 9B are drawings illustrating control of a cold spray gun for depositing material on a contoured main formation surface of a main tool, in accordance with various embodiments.

### DETAILED DESCRIPTION

All ranges and ratio limits disclosed herein may be combined. It is to be understood that unless specifically stated otherwise, references to "a," "an," and/or "the" may include one or more than one and that reference to an item in the singular may also include the item in the plural.

The detailed description of various embodiments herein makes reference to the accompanying drawings, which show various embodiments by way of illustration. These various embodiments are described in sufficient detail to enable those skilled in the art to practice the disclosure. Thus, the detailed description herein is presented for purposes of illustration only and not of limitation. Also, any reference to attached, fixed, connected, or the like may include permanent, removable, temporary, partial, full, and/or any other possible attachment option. Additionally, any reference to without contact (or similar phrases) may also include reduced contact or minimal contact. Cross hatching lines may be used throughout the figures to denote different parts but not necessarily to denote the same or different materials.

As used herein, "aft" refers to the direction associated with the exhaust (e.g., the back end) of a gas turbine engine. As used herein, "forward" refers to the direction associated with the intake (e.g., the front end) of a gas turbine engine.

As used herein, "radially outward" refers to the direction generally away from the axis of rotation of a turbine engine. As used herein, "radially inward" refers to the direction generally towards the axis of rotation of a turbine engine.

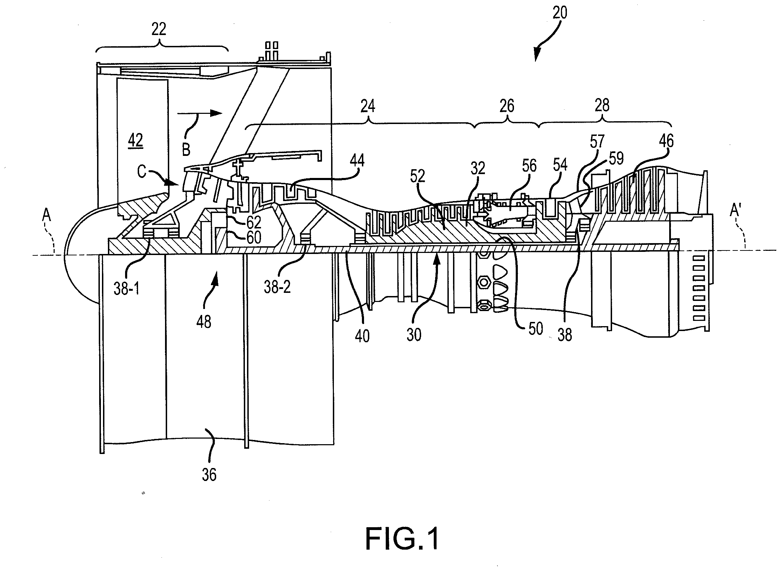

In various embodiments and with reference to FIG. 1, a gas turbine engine 20 is provided. The gas turbine engine 20 may be a two-spool turbofan that generally incorporates a fan section 22, a compressor section 24, a combustor section 26 and a turbine section 28. Alternative engines may include, for example, an augmentor section among other systems or features. In operation, the fan section 22 can drive coolant (e.g., air) along a bypass flow path B while the compressor section 24 can drive coolant along a core flow path C for compression and communication into the combustor section 26 then expansion through the turbine section 28. Although depicted as a two-spool turbofan gas turbine engine 20 herein, it should be understood that the concepts described herein are not limited to use with two-spool turbofans as the teachings may be applied to other types of turbine engines including turbojet, turboprop, turboshaft, or power generation turbines, with or without geared fan, geared compressor or three-spool architectures.

The gas turbine engine 20 may generally comprise a low speed spool 30 and a high speed spool 32 mounted for rotation about an engine central longitudinal axis A-A' relative to an engine static structure 36 or engine case via several bearing systems 38, 38-1, and 38-2. It should be understood that various bearing systems 38 at various locations may alternatively or additionally be provided, including for example, the bearing system 38, the bearing system 38-1, and the bearing system 38-2.

The low speed spool 30 may generally comprise an inner shaft 40 that interconnects a fan 42, a low pressure compressor 44 and a low pressure turbine 46. The inner shaft 40 may be connected to the fan 42 through a geared architecture 48 that can drive the fan 42 at a lower speed than the low speed spool 30. The geared architecture 48 may comprise a gear assembly 60 enclosed within a gear housing 62. The gear assembly 60 couples the inner shaft 40 to a rotating fan structure. The high speed spool 32 may comprise an outer shaft 50 that interconnects a high pressure compressor 52 and high pressure turbine 54. A combustor 56 may be located between high pressure compressor 52 and high pressure turbine 54. A mid-turbine frame 57 of the engine static structure 36 may be located generally between the high pressure turbine 54 and the low pressure turbine 46. Mid-turbine frame 57 may support one or more bearing systems 38 in the turbine section 28. The inner shaft 40 and the outer shaft 50 may be concentric and rotate via bearing systems 38 about the engine central longitudinal axis A-A', which is collinear with their longitudinal axes. As used herein, a "high pressure" compressor or turbine experiences a higher pressure than a corresponding "low pressure" compressor or turbine.

The airflow of core flow path C may be compressed by the low pressure compressor 44 then the high pressure compressor 52, mixed and burned with fuel in the combustor 56, then expanded over the high pressure turbine 54 and the low pressure turbine 46. The turbines 46, 54 rotationally drive the respective low speed spool 30 and high speed spool 32 in response to the expansion.

The gas turbine engine 20 may be, for example, a high-bypass ratio geared engine. In various embodiments, the bypass ratio of the gas turbine engine 20 may be greater than about six (6). In various embodiments, the bypass ratio of the gas turbine engine 20 may be greater than ten (10). In various embodiments, the geared architecture 48 may be an epicyclic gear train, such as a star gear system (sun gear in meshing engagement with a plurality of star gears supported by a carrier and in meshing engagement with a ring gear) or other gear system. The geared architecture 48 may have a gear reduction ratio of greater than about 2.3 and the low pressure turbine 46 may have a pressure ratio that is greater than about five (5). In various embodiments, the bypass ratio of the gas turbine engine 20 is greater than about ten (10:1). In various embodiments, the diameter of the fan 42 may be significantly larger than that of the low pressure compressor 44, and the low pressure turbine 46 may have a pressure ratio that is greater than about five (5:1). The low pressure turbine 46 pressure ratio may be measured prior to the inlet of the low pressure turbine 46 as related to the pressure at the outlet of the low pressure turbine 46 prior to an exhaust nozzle. It should be understood, however, that the above parameters are exemplary of various embodiments of a suitable geared architecture engine and that the present disclosure contemplates other gas turbine engines including direct drive turbofans. A gas turbine engine may comprise an industrial gas turbine (IGT) or a geared engine, such as a geared turbofan, or non-geared engine, such as a turbofan, a turboshaft, or may comprise any gas turbine engine as desired.

In various embodiments, the low pressure compressor 44, the high pressure compressor 52, the low pressure turbine 46, and the high pressure turbine 54 may comprise one or more stages or sets of rotating blades and one or more stages or sets of stationary vanes axially interspersed with the associated blade stages but non-rotating about engine central longitudinal axis A-A'. The compressor and turbine sections 24, 28 may be referred to as rotor systems. Within the rotor systems of the gas turbine engine 20 are multiple rotor disks, which may include one or more cover plates or minidisks. Minidisks may be configured to receive balancing weights or inserts for balancing the rotor systems.

Various components of gas turbine engine 20 may include one or more sheet structures. A sheet structure may include a relatively flat structure having a fairly broad surface relative to its thickness. For example, a sheet structure may have a thickness between 10 thousandths of an inch (0.0.254 millimeters) and 0.5 inches (12.7 millimeters), or between 15 thousandths of an inch (0.0.381 millimeters) and 250 thousandths of an inch (6.35 millimeters).

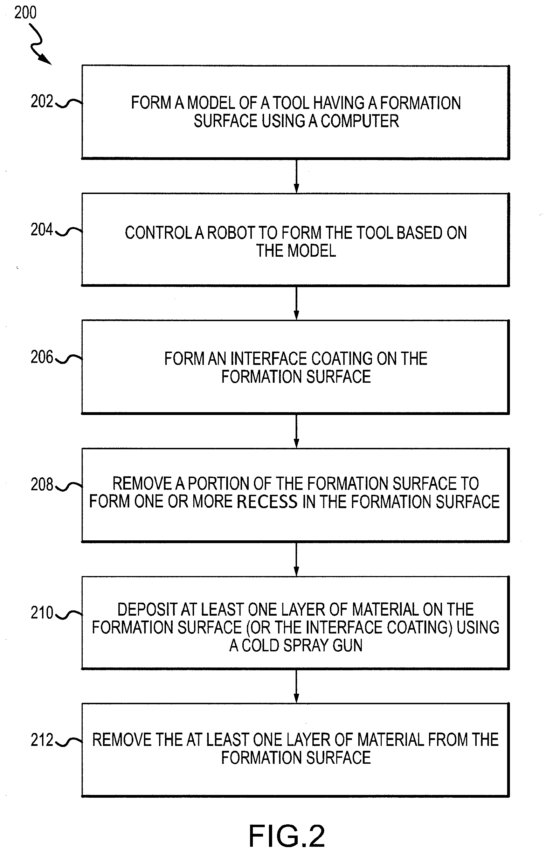

Conventional processes for manufacturing such sheet structures are relatively expensive and time-consuming. Referring to FIG. 2, a method 200 for forming a sheet structure using a cold-spray process is shown. Formation of a sheet structure using the method 200 may be less expensive and less time-consuming than conventional processes. In various embodiments, the method 200 may be used to form sheet structures having a relatively large size. For example, the method 200 may be used to form sheet structures having a surface area of at least 1 inch squared (1 in.², 2.54 centimeters squared (cm²)), 10 in.² (25.4 cm²), 36 in.² (91.44 cm²), or 100 in.² (254 cm²).

In block 202, a computer is used to create a model of a tool. A computer may include a processor, a memory, and input device, and an output device. A computer may include one or more computers having processors and one or more tangible, non-transitory memories and be capable of implementing logic. The processor(s) can be a general purpose processor, a digital signal processor (DSP), an application specific integrated circuit (ASIC), a field programmable gate array (FPGA), a graphical processing unit (GPU), or other programmable logic device, discrete gate or transistor logic, discrete hardware components, or any combination thereof. The memory may be any non-transitory memory capable of storing data. For example, the memory may store instructions to be executed by the processor, may store modeling software, may store a model of a component, or the like. The input device may include, for example, a mouse, a keyboard, a microphone, or the like. The output device may include, for example, a display, a speaker, an input/output port, or the like.

The tool is a formation surface on which a material of the sheet structure is deposited. In that regard, the tool is modeled such that the formation surface corresponds to a desired shape of the sheet structure. The tool may be modeled using any three-dimensional modeling software such as SolidWorks™, available from Dassault Systèmes of Velizy-Villacoublay, France.

The tool may include any material having sufficient yield strength to resist the formation in response to receiving spray from a cold-spray gun. As will be described below, a cold-spray deposition technique delivers material at a relatively low temperature. Accordingly, the tool may include materials having a relatively low thermal resistance, which may result in lower cost of the tools. For example, the tool may include a metal, a plastic, or another compound material such as nylon, polymers, high-temperature resins, aluminum, low melt alloys, or the like. A low melt alloy may include any metallic alloy that has a melting temperature of 450 degrees Fahrenheit (450 degrees F, 233 degrees Celsius (C)) or below. For example, a low melt alloy may include one or more of bismuth, lead, tin, cadmium, indium, and the like. Selection of a material for the tool may be based considering the cost of the material of the tool and a durability of the tool.

In block 204, a robot is controlled to form the tool based on the computer-generated model. The tool may be formed using additive manufacturing, such as stereolithography. In that regard, the robot may be an additive manufacturing device, such as a 3-D printer, connected to the computer. The computer may be electrically coupled to the additive manufacturing device such that the device forms the tool based on the model. In various embodiments, the robot may include a machine separate from the additive manufacturing device and may independently control the additive manufacturing device based on the computer-generated model. In various embodiments, a user may receive the model from the computer and may manually provide information corresponding to the model to an additive manufacturing device.

In block 206, an interface coating may be applied to the formation surface of the tool. The interface coating may include, for example, a metal formed on the formation surface using electroplating. The interface material may include, for example, an epoxy or low melt alloy. In that regard, the interface coating may provide various benefits such as erosion protection of the tool, thermal protection of the tool, generation of a desired surface finish or feature, facilitation of separation of the sheet structure from the tool, and increased rigidity and resistance to deformation resulting from contact with relatively high-velocity spray from a cold-spray gun. In that regard, the formation surface of the tool may include one or both of the interface material or the material of the tool.

In various embodiments, it may be desirable to form one or more features, such as ribs, in the sheet structure that have great thickness relative to other portions of the sheet structure. In order to form the feature, a portion of the formation surface may be removed to form one or more recess in the formation surface in block 208. In response to the sheet structure material being cold-sprayed onto the formation surface, additional material may collect in the recess such that the corresponding part of the sheet structure has a greater thickness at the location corresponding to the recess. In various embodiments, the tool may be formed to have the recess such that removal of a portion of the formation surface is optional.

In block 210, at least one layer of material is cold-sprayed onto the formation surface (or the interface coating) using a cold-spray deposition technique that utilizes a cold-spray gun. A cold-spray deposition technique is based on direct additive deposition of fine metallic particles that are accelerated to supersonic speeds using inert gas and a cold-spray gun. Inert gas may include at least one of an inert gas, air, or a less reactive gas, such as nitrogen. The cold-spray gun outputs a gas that includes the metallic particles and the inert gas. The output gas is directed towards the formation surface. The kinetic energy used in the process enables bonding of the metallic particles to each other on the formation surface of the tool, allowing the metallic particles to bind together to form the sheet structure. In various embodiments, the inert gas may be heated to a temperature that is between 400 degrees F (204.4 degrees C) and 1000 degrees F (537.8 degrees C). The temperature of the inert gas may, however, remain significantly below the melting point of the material of the metallic particles. In this context, significantly may refer to 5 percent (5%), or 15%, or 25%.

In various embodiments, it may be desirable for the sheet structure to have a greater relative thickness at particular locations. In that regard, the cold-spray gun may be used to apply more of the metallic particles to the particular locations to increase the thickness at the particular locations.

In various embodiments, the cold-spray gun may be controlled by at least one of a computer or a robot. In that regard, the computer or robot may be programmed to spray a predetermined amount of the metallic particles at each location of the sheet structure. The predetermined amount of the metallic particles sprayed at each location may result in each location of the sheet structure achieving the desired thickness.

Using a computer, and an electromechanical control system that is controlled by the computer, to control the cold-spray gun may result in a relatively accurate deposition of the metallic particles. The computer (or a user) may control such deposition factors as rate of discharge of the metallic particles, a distance from the tool from which the cold-spray gun is used, and the rate of movement of the cold-spray gun relative to the tool to adjust the thickness of the sheet structure.

A cold-spray gun outputs a relatively narrow plume of the output gas. This relatively narrow plume results in an ability to precisely position the metallic particles where desired.

The metallic particles used to form the sheet structure may include various metals and corresponding alloys such as, for example, titanium, nickel, aluminum and titanium aluminide alloys, cobalt alloys, or the like.

In block 212, the at least one layer of material (corresponding to the sheet structure) is removed from the formation surface. This sheet structure may be removed in a variety of manners. In various embodiments, the sheet structure may be physically manipulated away from the formation surface by applying a force to the sheet structure in a direction away from the formation surface. In various embodiments, this physical manipulation may be performed by a user grasping a portion of the sheet structure, may be performed by a user using a tool, such as a crowbar, to separate the sheet structure from the tool, or the like. In various embodiments, the tool may be constructed such that introduction of pressurized fluid causes flexure of the tool (potentially including the formation surface), thus facilitating release of the sheet structure. In various embodiments, water or another fluid may be introduced between the formation surface and the sheet structure via capillary action or other means. In that regard, the fluid may be frozen (and thus expand), exerting a separating force/pressure to facilitate release of the sheet structure.

In various embodiments, a releasing agent may be applied between the sheet structure and the tool to facilitate release of the sheet structure from the formation surface. The release agent may include, for example, Boron Nitride (i.e., a hexagonal boron nitride). The release agent may be applied between the sheet structure and the formation surface or between the formation surface and the interface coating prior to cold-spray deposition of the metallic particles or after cold-spray deposition of the metallic particles. The properties of the release agent may result in a weaker bond between the sheet structure and the tool, allowing the sheet structure to be removed from the tool with relative ease. In various embodiments, the release agent may be used and the sheet structure may still be physically manipulated away from the formation surface.

In various embodiments, the combination of the tool and the sheet structure may be heated to such a temperature that the sheet structure does not deform yet the tool, or interface coating, deforms or de-bonds from the sheet structure, facilitating release of the sheet structure. In various embodiments, the interface coating may include an adhesive having a melting point above that of the temperature of the cold-spray gas and below that of the sheet structure. In that regard, the sheet structure and the interface coating may be heated to the melting point of the interface coating, facilitating release of the sheet structure. The interface coating may then be reapplied to the tool prior to a new sheet structure being formed on the tool.

In various embodiments, the sheet structure may be etched from the tool. For example, an acid such as a Bronsted-Lowry acid or another etching agent or chemically reactive material may be applied to the tool, thereby etching the tool away from the sheet structure.

In various embodiments, additional operations may be performed on the sheet structure to complete the part after separation from the tool. For example, the additional operations may include machining of interfaces, welding of the part to additional parts, forming an integral portion of the sheet structure using a cold-spray deposition technique with a different tool, or the like.

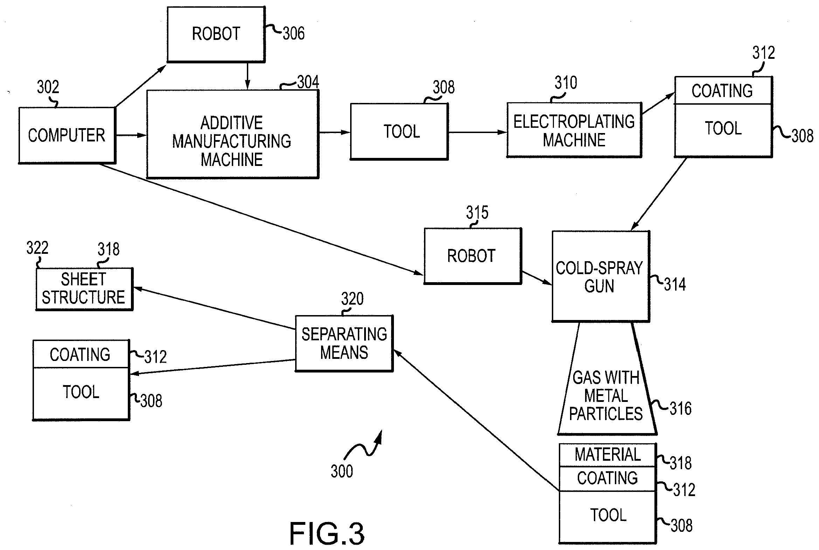

Turning now to FIG. 3, a system 300 for implementing the method 200 of FIG. 2 is shown. The system 300 includes a computer 302 in communication with an additive manufacturing machine 304 and a robot 306. In various embodiments, the robot 306 may not be present in the system 300. In various embodiments, the tool may be made using a machine different from the additive manufacturing machine 304.

A user may create a model of a tool using the computer 302. In various embodiments, the model may be received by the robot 306 and/or the additive manufacturing machine 304 which may, in turn, form a tool 308. In various embodiments, a user may provide the model to the robot 306 and/or the additive manufacturing machine 304. In various embodiments, a user may manually control the additive manufacturing machine 304 to create the tool 308.

The tool 308 may then be provided to an electroplating machine 310 or another device, which may apply an interface coating 312 on the tool 308. In various embodiments, the electroplating machine 310 may not be present in the system 300 such that no interface coating is applied. In various embodiments, the interface coating 312 may be applied via brushing, spraying, or another device. In various embodiments, the electroplating machine 310 may be controlled by the computer 302 or by another computer or robot to form the interface coating 312.

After the interface coating 312 is applied to the tool 308, the combined tool 308 and interface coating 312 is subjected to spray from a cold-spray gun 314. The cold-spray gun 314 may direct a gas with metallic particles 316 towards the tool 308 and the interface coating 312. The gas with metallic particles 316 may hit the interface coating 312 and may begin to form one or more layer of material 318 on the interface coating 312. In various embodiments, the cold-spray gun 314 may be controlled by the computer 302 and/or by a robot 315. In various embodiments, the cold-spray gun 314 may be controlled by a separate computer or may be independently controlled.

After the material 318 has been applied to the interface coating 312, the combined tool 308, interface coating 312, and material 318 are subjected to a separating means 320. The separating means 320 may include any method or structure used to separate the material 318 from the interface coating 312 as described above with reference to block 212 of FIG. 2. The separating means 320 may separate the material 318 from the interface coating 312. The resulting material 318 corresponds to a sheet structure 322.

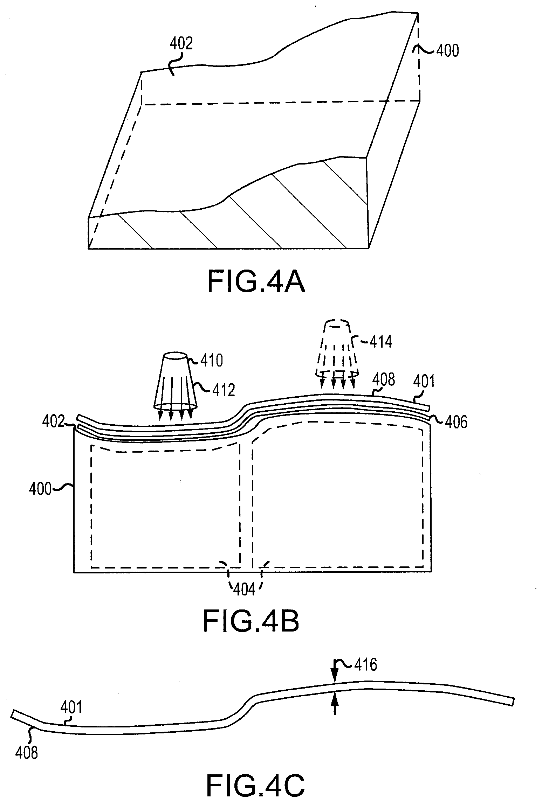

Referring now to FIGS. 4A and 4B, an exemplary tool 400 and sheet structure 401 is shown. The tool 400 has a formation surface 402. The formation surface 402 has a shape that corresponds to a desired shape of the sheet structure 401. The tool 400 includes one or more pockets 404 positioned within the tool 400 and having a material that is different from the remaining material of the tool 400. The pockets 404 may be designed to reduce the likelihood of deformation of the tool 400 due to impact with a relatively high velocity gas from a cold-spray gun 410. In that regard, the pockets 404 may include a material having a yield strength that is greater than that of the remaining portions of the tool 400. For example, the pockets 404 may include an epoxy or a low melt alloy.

An interface coating 406 may be applied to the formation surface 402 of the tool 400. The interface coating 406 may provide benefits as described above with reference to FIG. 2.

A cold-spray gun 410 deposits metallic particles onto the interface coating 406 to form one or more layer of material 408. In order to deposit metallic particles onto the interface coating 406, the cold-spray gun 410 may move relative to the tool 400. For example, the cold-spray gun 410 may move from a first location 412 to a second location 414, depositing metallic particles at desired thicknesses along the way.

After the desirable amount of material 408 has been applied to the interface coating 406, the material 408 may be separated from the interface coating 406 in one or more manners as described above with reference to FIG. 2.

Referring now to FIGS. 4A, 4B, and 4C, the material 408 that is separated from the interface coating 406 may be the sheet structure 401. As shown, the sheet structure 401 has a shape that corresponds to the shape of the formation surface 402. The sheet structure 401 may have a thickness 416 that corresponds to the amount of metallic particles deposited on the interface coating 406. The cold-spray gun 410 may achieve the desired thickness 416 in one or more of a variety of manners. For example, the desired thickness 416 may be achieved by making a predetermined number of passes over the formation surface 402 with the cold-spray gun 410, may be achieved by adjusting the rate of flow of gas exiting the cold-spray gun 410, may be achieved by adjusting the rate at which the cold-spray gun 410 moves relative to the formation surface 402, or the like.

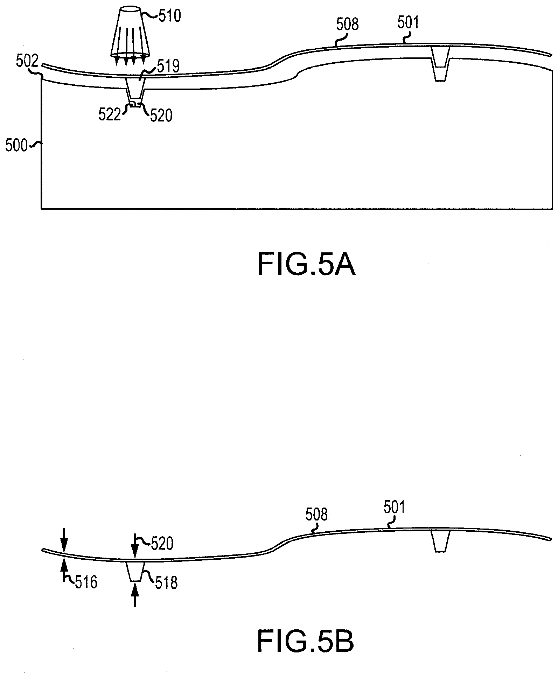

Turning now to FIGS. 5A and 5B, another tool 500 may include a formation surface 502 on which at least one layer of material 508 is directly deposited to form a sheet structure 501. Stated differently, the tool 500 may not include an interface coating. The formation surface 502 may have a shape that is similar to the formation surface 402 of FIG. 4A. However, it may be desirable for the sheet structure 501 to have one or more feature 518 such as a rib.

In order to form the feature 518, a portion 519 of the formation surface 502 may be removed from the tool 500 to form a recess 520. In various embodiments, a tool that includes an interface coating may be manipulated such that a portion of the interface coating and/or the formation surface 502 is removed from the tool to form the feature on the sheet structure. In various embodiments, the tool 500 may be formed with the recess 520 in place such that the tool 500 may be used without removal of any of the tool 500.

After the portion 519 of the formation surface 502 is removed, a cold-spray gun 510 may deposit metallic particles on the formation surface 502. In various embodiments, the cold-spray gun 510 may be manipulated across the formation surface 502 to deposit additional material within the recess 520. In various embodiments, the recess 520 may have particular features that facilitate bonding of the metallic particles within the recess 520. For example, the recess 520 may have an angle 522 that is greater than 90 degrees. The angle 522 may allow the metallic particles to bond together and entirely fill the recess 520.

In response to the sheet structure 501 being separated from the formation surface 502, the metal that was deposited in the recess 520 may form the feature 518 such as the rib. In various embodiments, the recess 520 may not be completely filled by the material. In that regard, the sheet structure 501 may have an indentation, or a volume, where the recess 520 is not completely filled.

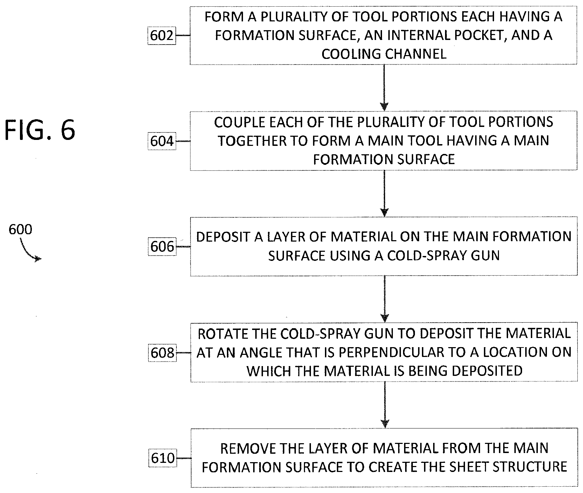

Turning now to FIG. 6, a method 600 for forming a sheet structure using a main tool is shown. In block 602, a plurality of tool portions may be formed. Each of the tool portions may be formed in a similar manner as the tool described above with reference to FIG. 2. Each of the tool portions has a formation surface. In various embodiments, one or more of the tool portions may include a pocket that is similar to the pockets 404 of FIG. 4. According to the invention, one or more of the tool portions include a cooling channel as will be described below.

In block 604, each of the plurality of tool portions may be coupled together to collectively form a main tool. The formation surface of each of the plurality of tool portions may collectively be referred to as a main formation surface. Each of the plurality of tool portions may be coupled together in a variety of manners. For example, each of the plurality of tool portions may include an interlocking feature configured to interlock with one or more adjacent tool portions. As another example, each of the plurality of tool portions may be coupled together via an adhesive or a fastener.

In block 606, a layer of material is deposited on the main formation surface using a cold-spray gun. In block 606, as the layer of material is being deposited on the main formation surface, the cold-spray gun may be rotated (such as by a robot or computer as described above) such that the material is deposited at an angle that is substantially perpendicular to a location on the main formation surface on which the material is being deposited. Depositing the material at the substantially perpendicular angle advantageously results in a relatively even distribution of particles of the material on the formation surface.

In block 610, the layer of material is removed from the main formation surface to create the sheet structure. The layer of material may be removed in a similar manner as described above with reference to FIG. 2.

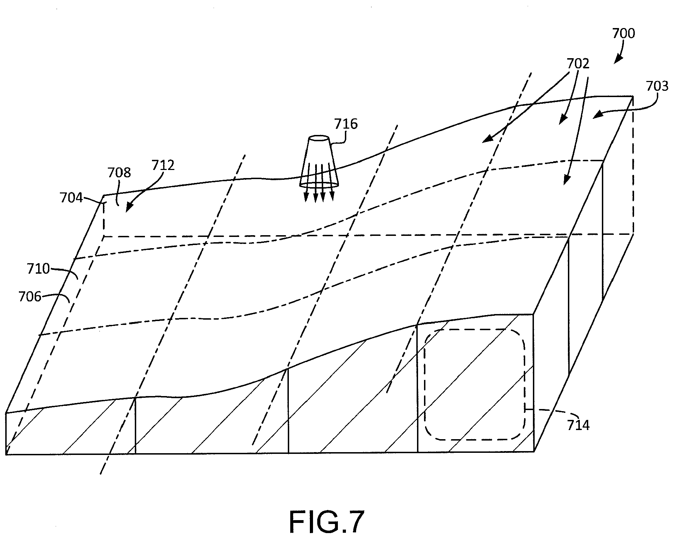

Turning to FIG. 7, a main tool 700 is modular and thus includes a plurality of tool portions of 702. Each of the plurality of tool portions 702 includes a corresponding formation surface 703 which collectively is referred to as a main formation surface 712. In particular, the main tool 700 includes a first tool portion 704 having a first formation surface 708 and a second tool portion 706 having a second formation surface 710. As shown, some or all the plurality of tool portions 702 may have different shapes. In that regard, the plurality of tool portions 702 may be coupled together such that the main formation surface 712 comprising the formation surface 703 of each of the plurality of tool portions 702 corresponds to a desired shape of a sheet structure.

As shown, one or more of the plurality of tool portions 702 may include a pocket 714. The pocket 714 may be similar to the pockets 404 of FIG. 4.

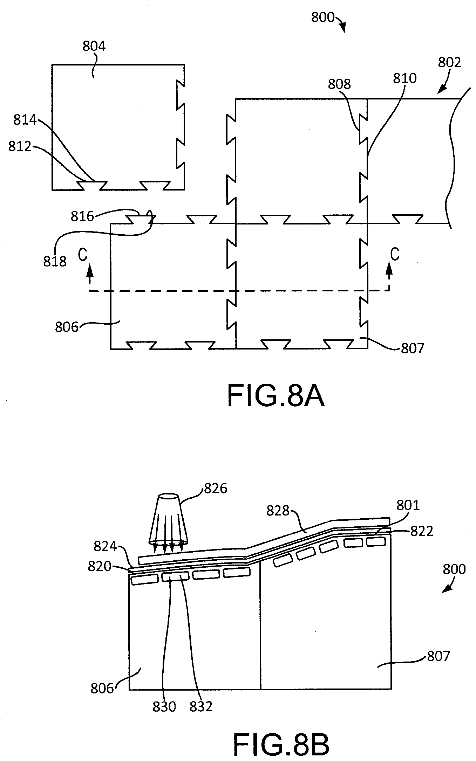

Referring to FIG. 8A, a top down view of a main tool 800 illustrates various features of the main tool 800. The main tool 800 is modular and thus includes a plurality of tool portions 802 including a first tool portion 804, a second tool portion 806, and a third tool portion 807. Each of the plurality of tool portions 802 may include interlocking features 808, such as dovetail features 810. In particular, the first tool portion 804 includes a first interlocking feature 812 which is shown to be a first dovetail feature 814. Similarly, the second tool portion 806 may include a second interlocking feature 816 which is shown to be a second dovetail feature 818. A dovetail feature may include one or more tapered projections (i.e., tenons) and/or one or more notches or recesses (i.e., mortises) such that the tapered projections fit within the notches or recesses. In various embodiments, an interlocking feature may include one or more of a dovetail feature, a hole (threaded or not) for receiving a bolt, screw, or other connector, a clip, a spring clip, a wire, another fastener feature, an adhesive, welding, or the like.

The first dovetail feature 814 (i.e., a mortise) may have a shape that corresponds to a shape of the second dovetail feature 818 (i.e., a tenon). In that regard, the first dovetail feature 814 may receive the second dovetail feature 818. In response to the first dovetail feature 814 receiving the second dovetail feature 818, the second tool portion 806 may be removably coupled to the first tool portion 804. Each of the plurality of tool portions 802 may have similar interlocking features, or dovetail features, such that the interlocking features may be used to removably couple each of the plurality of tool portions 802 together.

Referring now to FIG. 8B, a cross-sectional view of a portion of the main tool 800 corresponding to the line C-C of FIG. 8A is shown. The portion of the main tool 800 illustrated in FIG. 8B includes the second tool portion 806 and the third tool portion 807. The second tool portion 806 includes a second formation surface 820, and the third tool portion 807 includes a third formation surface 822. The second formation surface 820 and the third formation surface 822 together comprise a portion of a main formation surface 801.

An interface coating 824, similar to the interface coating 312 of FIG. 3, may be applied to the main formation surface 801. A cold-spray gun 826 deposits a layer of material 828 on the interface coating 824.

Each of the second tool portion 806 and the third tool portion 807 may include cooling channels. For example, the second tool portion 806 includes a cooling channel 830. Each of the cooling channels may be designed to transport a coolant, such as air. The cooling channel 830 may facilitate a flow of coolant 832 therethrough. The coolant 832 may reduce a temperature experienced on the main formation surface 801 due to deposit of material from the cold-spray gun 826 (i.e., heat removal). In that regard, the second tool portion 806 may include a material having a relatively low resistance to heat as the coolant 832 may reduce heat experienced by the main formation surface 801. This is beneficial as materials with relatively low heat resistance may cost less than materials with a relatively high heat resistance. Thus, the cooling channel 830 facilitates thermal protection of the main formation surface 801.

The cooling channel 830 is positioned proximate to the main formation surface 801 (i.e., positioned closer to the main formation surface 801 than an opposing surface of the main tool 800). In that regard, heat from the main formation surface 801 is transferred to locations away from the main formation surface 801 via the coolant 832, thus cooling the main formation surface 801. In that regard, temperature resistance of the second tool portion 806, tensile strength of the second tool portion 806, and whether or not one or more pocket is included in the second tool portion 806 may be considered when determining a distance between the cooling channel 830 and the main formation surface 801.

In various embodiments and referring to FIGS. 8A and 8B, each of the plurality of tool portions 802 may include a cooling channel. In various embodiments, cooling channels of adjacent tool portions 802 may be aligned such that a coolant may flow through cooling channels of adjacent tool portions 802. For example, the first tool portion 804 may include a cooling channel that aligns with the cooling channel 830 of the second tool portion 806. In that regard, the coolant 832 may flow through the cooling channel 830 of the second tool portion 806 and the corresponding cooling channel of the first tool portion 804.

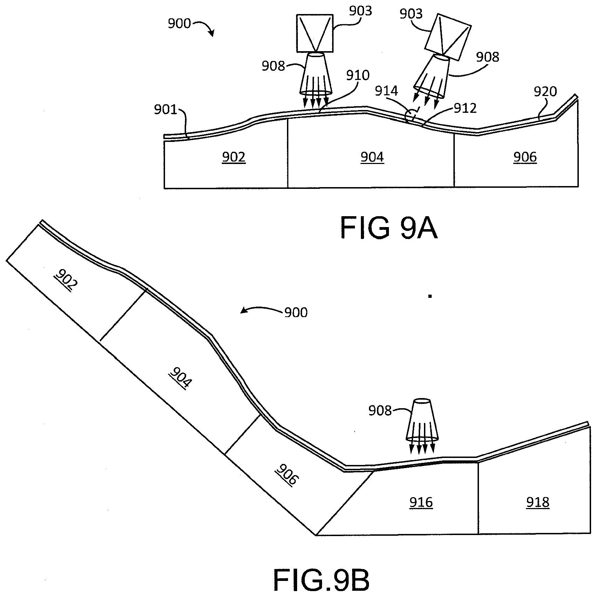

Turning to FIG. 9A, another main tool 900 is illustrated. The main tool 900 includes a first tool portion 902, a second tool portion 904, and a third tool portion 906. Each of the first tool portion 902, the second tool portion 904, and the third tool portion 906 may have corresponding formation surfaces which collectively form a main formation surface 901.

A cold-spray gun 908 is designed to deposit a layer of material 920 on the main formation surface 901. As shown, the main formation surface 901 may be contoured. In order to obtain a uniform distribution of the material on the main formation surface 901, it is desirable for the cold-spray gun 908 to deposit material at an angle substantially perpendicular to the location on which the material is deposited. In that regard, an electromechanical controller 903 may control an orientation of the cold-spray gun 908 relative to the main formation surface 901.

The electromechanical controller 903 may include a controller and one or more actuator. The controller may determine a desired orientation of the cold-spray gun 908 and may control the actuator to cause the cold-spray gun 908 to have the desired orientation.

A first location 910 on the main formation surface 901 may be relatively parallel to a surface on which the main tool 900 is positioned. In that regard, the electromechanical controller 903 may control the cold-spray gun 908 to deposit material at an angle substantially perpendicular to the surface on which the main tool 900 is positioned. A second location 912 on the main formation surface 901 may be angled relative to the first location 910. In that regard, the electromechanical controller 903 may control the cold-spray gun 908 to deposit the material at an angle 914 relative to the second location 912. The angle 914 may be substantially perpendicular, such as between 75 degrees and 105 degrees, or between 80 degrees and 100 degrees, or between 85 degrees and 95 degrees, or 90 degrees. The electromechanical controller 903 may continue to adjust an angle of the cold-spray gun 908 relative to the main formation surface 901 as the cold-spray gun 908 moves relative to the main formation surface 901.

Referring now to FIG. 9B, additional tool portions may be included with the main tool 900 due to the modular nature of the main tool 900. For example, a fourth tool portion 916 and a fifth tool portion 918 may be coupled to the first tool portion 902, the second tool portion 904, and the third tool portion 906. The modularity of the main tool 900 is advantageous when forming a relatively large sheet structure as a cost of forming a main tool having a smaller tool portions may be less than a cost of forming a single main tool.

The disclosure is thus not limited to the particular examples disclosed herein, but includes all embodiments falling within the scope of the appended claims.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of a, b, or c" is used in the claims, it is intended that the phrase be interpreted to mean that a alone may be present in an embodiment, b alone may be present in an embodiment, c alone may be present in an embodiment, or that any combination of the elements a, b and c may be present in a single embodiment; for example, a and b, a and c, b and c, or a and b and c. Different cross-hatching is used throughout the figures to denote different parts but not necessarily to denote the same or different materials.

Systems, methods and apparatus are provided herein. In the detailed description herein, references to "one embodiment", "an embodiment", "an example embodiment", etc., indicate that the embodiment described may include a particular feature, structure, or characteristic, but every embodiment may not necessarily include the particular feature, structure, or characteristic. Moreover, such phrases are not necessarily referring to the same embodiment. After reading the description, it will be apparent to one skilled in the relevant art(s) how to implement the disclosure in alternative embodiments.

As used herein, the terms "comprises", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

## Claims

1. A method for forming a sheet structure (401; 501), comprising:
depositing at least one layer of material (318; 408; 508) on a main formation surface (402; 502; 712; 801; 901) of a main tool (308; 400; 500; 700; 800; 900) using a cold-spray technique, the main tool (308; 400; 500; 700; 800; 900) having a plurality of tool portions (702; 802; 902; 904; 906) that each have a formation surface such that the formation surface of each of the plurality of tool portions (702; 802; 902; 904; 906) forms the main formation surface (402; 502; 712; 801; 901) corresponding to a desired structure shape of the sheet structure (401; 501); and
removing the at least one layer of material (318; 408; 508) from the main formation surface (402; 502; 712; 801; 901) to create the sheet structure (401; 501),
**characterised in that** at least one tool portion has a cooling channel (830) positioned proximate to the formation surface of the at least one tool portion and configured to remove heat from the formation surface and to thermally protect the formation surface.

2. The method of claim 1, further comprising coupling each of the plurality of tool portions (702; 802; 902; 904; 906) together to resist separation of any of the plurality of tool portions (702; 802; 902; 904; 906) in response to deposition of the at least one layer of material (318; 408; 508).

3. The method of claim 2, wherein coupling each of the plurality of tool portions (702; 802; 902; 904; 906) together includes coupling each of the plurality of tool portions (702; 802; 902; 904; 906) together using interlocking features (808) of the plurality of tool portions (702; 802; 902; 904; 906), wherein optionally, the interlocking features include dovetail features.

4. The method of any preceding claim, wherein at least one of the tool portions includes a first material and has a pocket having a second material that is different than the first material, wherein optionally, the different material of the pocket has a compressive yield strength that is greater than that of a material of the remaining portion of the at least one tool portion.

5. The method of any preceding claim, wherein depositing at least one layer of material (318; 408; 508) on the main formation surface (402; 502; 712; 801; 901) includes controlling a cold-spray gun (410; 510; 716; 826; 908) to rotate to deposit the at least one layer of material (318; 408; 508) at an angle that is substantially perpendicular to a location on which the at least one layer of material (318; 408; 508) is being deposited.

6. A system for forming a sheet structure (401; 501), comprising:
a main tool (308; 400; 500; 700; 800; 900) having a plurality of tool portions (702; 802; 902; 904; 906) that each have a formation surface such that the formation surface of each of the plurality of tool portions (702; 802; 902; 904; 906) forms a main formation surface (402; 502; 712; 801; 901) corresponding to a desired shape of the sheet structure (401; 501);
a cold-spray gun (410; 510; 716; 826; 908) configured to output a gas including particles of a material towards the main formation surface (402; 502; 712; 801; 901) at a velocity sufficiently great to cause the particles of the material to bond together; and
a device for separating the material from the main formation surface (402; 502; 712; 801; 901) to create the sheet structure (401; 501),
**characterised in that** at least one of the plurality of tool portions has a cooling channel (830) positioned proximate to the formation surface of the at least one tool portion and configured to remove heat from the formation surface and to thermally protect the formation surface.

7. The system of claim 6, wherein each of the plurality of tool portions (702; 802; 902; 904; 906) is configured to be coupled together to resist separation of any of the plurality of tool portions (702; 802; 902; 904; 906) in response to deposition of the material.

8. The system of claim 7, wherein each of the plurality of tool portions (702; 802; 902; 904; 906) includes an interlocking feature (808) usable to couple each of the plurality of tool portions (702; 802; 902; 904; 906) together, wherein optionally, the interlocking feature (808) includes a dovetail feature.

9. The system of any of claims 6 to 8, wherein at least one of the plurality of tool portions (702; 802; 902; 904; 906) includes a pocket having a different material than a remaining portion of the at least one tool portion.

10. The system of claim 9, wherein the different material of the pocket has a compressive yield strength that is greater than that of the material of the remaining portion of the at least one tool portion.

11. The system of any of claims 6 to 10, wherein the cold-spray gun (410; 510; 716; 826; 908) is configured to rotate to output the gas at an angle that is substantially perpendicular to a location on the main formation surface (402; 502; 712; 801; 901) onto which the gas is output.

12. A main tool (308; 400; 500; 700; 800; 900) for use in forming a sheet structure using a cold-spray technique, comprising:
a first tool portion (804) having a first formation surface and a first interlocking feature (812); and
a second tool portion (806) having a second formation surface and a second interlocking feature (816) such that the first formation surface and the second formation surface form at least part of a main formation surface (402; 502; 712; 801; 901) and are configured to receive a cold-spray that includes a gas and particles of a material at a velocity sufficiently great to cause the particles of the material to bond together,
**characterised in that** at least one of the first tool portion (804) or the second tool portion (806) includes a cooling channel (830) positioned proximate to at least one of the first formation surface or the second formation surface and configured to transport a coolant to remove heat from the formation surface and thermally protect the formation surface.

13. The main tool of claim 12, wherein the first interlocking feature (812) and the second interlocking feature (816) each include a dovetail feature.

14. The main tool of claim 12 or 13, wherein at least one of the first tool portion (804) or the second tool portion (806) includes a pocket having a different material than a remaining portion of the at least one of the first tool portion (804) or the second tool portion (806).

## Patentansprüche

1. Verfahren zum Herstellen einer Plattenstruktur (401; 501), umfassend:
Aufbringen mindestens einer Materialschicht (318; 408; 508) auf eine Hauptherstellungsfläche (402; 502; 712; 801; 901) eines Hauptwerkzeugs (308; 400; 500; 700; 800; 900) unter Verwendung eines Kaltspritzverfahrens, wobei das Hauptwerkzeug (308; 400; 500; 700; 800; 900) eine Vielzahl von Werkzeugabschnitten (702; 802; 902; 904; 906) aufweist, die jeweils eine Herstellungsfläche aufweisen, so dass die Herstellungsfläche jedes aus der Vielzahl von Werkzeugabschnitten (702; 802; 902; 904; 906) die Hauptherstellungsfläche (402; 502; 712; 801; 901) entsprechend einer erwünschten Strukturform der Plattenstruktur (401; 501) bildet; und
Entfernen der mindestens einen Materialschicht (318; 408; 508) von der Hauptherstellungsfläche (402; 502; 712; 801; 901), um die Plattenstruktur (401; 501) zu erzeugen,
**dadurch gekennzeichnet, dass** mindestens ein Werkzeugabschnitt einen Kühlkanal (830) aufweist, der nahe der Herstellungsfläche des mindestens einen Werkzeugabschnitts positioniert ist und dazu konfiguriert ist, Wärme von der Herstellungsfläche abzuführen und die Herstellungsfläche thermisch zu schützen.

2. Verfahren nach Anspruch 1, ferner umfassend das Koppeln jedes aus der Vielzahl von Werkzeugabschnitten (702; 802; 902; 904; 906) miteinander, um der Trennung eines aus der Vielzahl von Werkzeugabschnitten (702; 802; 902; 904; 906) als Reaktion auf das Aufbringen der mindestens einen Materialschicht (318; 408; 508) zu widerstehen.

3. Verfahren nach Anspruch 2, wobei das Koppeln jedes aus der Vielzahl von Werkzeugabschnitten (702; 802; 902; 904; 906) miteinander das Koppeln jedes aus der Vielzahl von Werkzeugabschnitten (702; 802; 902; 904; 906) miteinander unter Verwendung von Verzahnungsmerkmalen (808) der Vielzahl von Werkzeugabschnitten (702; 802; 902; 904; 906) beinhaltet, wobei optional die Verzahnungsmerkmale Schwalbenschwanzmerkmale beinhalten.

4. Verfahren nach einem der vorstehenden Ansprüche, wobei mindestens einer der Werkzeugabschnitte ein erstes Material beinhaltet und eine Aussparung aufweist, die ein zweites Material aufweist, das sich von dem ersten Material unterscheidet, wobei optional das andere Material der Aussparung eine Druckstreckgrenze aufweist, die größer ist als diejenige eines Materials des verbleibenden Abschnitts des mindestens einen Werkzeugabschnitts.

5. Verfahren nach einem der vorstehenden Ansprüche, wobei das Aufbringen mindestens einer Materialschicht (318; 408; 508) auf die Hauptherstellungsfläche (402; 502; 712; 801; 901) das Steuern einer Kaltspritzpistole (410; 510; 716; 826; 908) beinhaltet, so dass sie sich dreht, um die mindestens eine Materialschicht (318; 408; 508) in einem Winkel aufzubringen, der im Wesentlichen senkrecht zu einer Position ist, auf die die mindestens eine Materialschicht (318; 408; 508) aufgebracht wird.

6. System zum Herstellen einer Plattenstruktur (401; 501), umfassend:
ein Hauptwerkzeug (308; 400; 500; 700; 800; 900), das eine Vielzahl von Werkzeugabschnitten (702; 802; 902; 904; 906) aufweist, die jeweils eine Herstellungsfläche aufweisen, so dass die Herstellungsfläche jedes aus der Vielzahl von Werkzeugabschnitten (702; 802; 902; 904; 906) eine Hauptherstellungsfläche (402; 502; 712; 801; 901) entsprechend einer erwünschten Form der Plattenstruktur (401; 501) bildet;
eine Kaltspritzpistole (410; 510; 716; 826; 908), die dazu konfiguriert ist, ein Gas, das Partikel eines Materials beinhaltet, in Richtung der Hauptherstellungsfläche (402; 502; 712; 801; 901) mit einer Geschwindigkeit abzugeben, die groß genug ist, um zu bewirken, dass sich die Partikel des Materials miteinander verbinden; und
eine Vorrichtung zum Trennen des Materials von der Hauptherstellungsfläche (402; 502; 712; 801; 901), um die Plattenstruktur (401; 501) zu erzeugen,
**dadurch gekennzeichnet, dass** mindestens einer aus der Vielzahl von Werkzeugabschnitten einen Kühlkanal (830) aufweist, der nahe der Herstellungsfläche des mindestens einen Werkzeugabschnitts positioniert ist und dazu konfiguriert ist, Wärme von der Herstellungsfläche abzuführen und die Herstellungsfläche thermisch zu schützen.

7. System nach Anspruch 6, wobei jeder aus der Vielzahl von Werkzeugabschnitten (702; 802; 902; 904; 906) dazu konfiguriert ist, miteinander gekoppelt zu werden, um der Trennung eines aus der Vielzahl von Werkzeugabschnitten (702; 802; 902; 904; 906) als Reaktion auf das Aufbringen des Materials zu widerstehen.

8. System nach Anspruch 7, wobei jeder aus der Vielzahl von Werkzeugabschnitten (702; 802; 902; 904; 906) ein Verzahnungsmerkmal (808) beinhaltet, das verwendet werden kann, um jeden aus der Vielzahl von Werkzeugabschnitten (702; 802; 902; 904; 906) miteinander zu koppeln, wobei optional das Verzahnungsmerkmal (808) ein Schwalbenschwanzmerkmal beinhaltet.

9. System nach einem der Ansprüche 6 bis 8, wobei mindestens einer aus der Vielzahl von Werkzeugabschnitten (702; 802; 902; 904; 906) eine Aussparung beinhaltet, die ein anderes Material als ein verbleibender Abschnitt des mindestens einen Werkzeugabschnitts aufweist.

10. System nach Anspruch 9, wobei das andere Material der Aussparung eine Druckstreckgrenze aufweist, die größer ist als diejenige des Materials des verbleibenden Abschnitts des mindestens einen Werkzeugabschnitts.

11. System nach einem der Ansprüche 6 bis 10, wobei die Kaltspritzpistole (410; 510; 716; 826; 908) dazu konfiguriert ist, sich zu drehen, um das Gas in einem Winkel abzugeben, der im Wesentlichen senkrecht zu einer Position an der Hauptherstellungsfläche (402; 502; 712; 801; 901) ist, auf die das Gas abgegeben wird.

12. Hauptwerkzeug (308; 400; 500; 700; 800; 900) zur Verwendung beim Herstellen einer Plattenstruktur unter Verwendung eines Kaltspritzverfahrens, umfassend:
einen ersten Werkzeugabschnitt (804), der eine erste Herstellungsfläche und ein erstes Verzahnungsmerkmal (812) aufweist; und
einen zweiten Werkzeugabschnitt (806), der eine zweite Herstellungsfläche und ein zweites Verzahnungsmerkmal (816) aufweist, so dass die erste Herstellungsfläche und die zweite Herstellungsfläche mindestens einen Teil einer Hauptherstellungsfläche (402; 502; 712; 801; 901) bilden und dazu konfiguriert sind, einen Kaltspritzstrahl, der ein Gas und Partikel eines Materials beinhaltet, mit einer Geschwindigkeit aufzunehmen, die ausreichend groß ist, um zu bewirken, dass sich die Partikel des Materials verbinden,
**dadurch gekennzeichnet, dass** mindestens einer von dem ersten Werkzeugabschnitt (804) oder dem zweiten Werkzeugabschnitt (806) einen Kühlkanal (830) beinhaltet, der nahe an mindestens einer von der ersten Herstellungsfläche oder der zweiten Herstellungsfläche positioniert ist und dazu konfiguriert ist, ein Kühlmittel zu befördern, um Wärme von der Herstellungsfläche abzuführen und die Herstellungsfläche thermisch zu schützen.

13. Hauptwerkzeug nach Anspruch 12, wobei das erste Verzahnungsmerkmal (812) und das zweite Verzahnungsmerkmal (816) jeweils ein Schwalbenschwanzmerkmal beinhalten.

14. Hauptwerkzeug nach Anspruch 12 oder 13, wobei mindestens einer von dem ersten Werkzeugabschnitt (804) oder dem zweiten Werkzeugabschnitt (806) eine Aussparung beinhaltet, die ein anderes Material aufweist als ein verbleibender Abschnitt des mindestens einen von dem ersten Werkzeugabschnitt (804) oder dem zweiten Werkzeugabschnitt (806).

## Revendications

1. Procédé pour former une structure de feuille (401 ; 501), comprenant :
le dépôt d'au moins une couche de matériau (318 ; 408 ; 508) sur une surface de formation principale (402 ; 502 ; 712 ; 801 ; 901) d'un outil principal (308 ; 400 ; 500 ; 700 ; 800 ; 900) à l'aide d'une technique de pulvérisation à froid, l'outil principal (308 ; 400 ; 500 ; 700 ; 800 ; 900) ayant une pluralité de parties d'outil (702 ; 802 ; 902 ; 904 ; 906) qui ont chacune une surface de formation de sorte que la surface de formation de chacune de la pluralité de parties d'outil (702 ; 802 ; 902 ; 904 ; 906) forme la surface de formation principale (402 ; 502 ; 712 ; 801 ; 901) correspondant à une forme de structure souhaitée de la structure de feuille (401 ; 501) ; et
le retrait de l'au moins une couche de matériau (318 ; 408 ; 508) de la surface de formation principale (402 ; 502 ; 712 ; 801 ; 901) pour créer la structure de feuille (401 ; 501),
**caractérisé en ce qu'**au moins une partie d'outil a un canal de refroidissement (830) positionné à proximité de la surface de formation de l'au moins une partie d'outil et conçu pour éliminer la chaleur de la surface de formation et pour protéger thermiquement la surface de formation.

2. Procédé selon la revendication 1, comprenant en outre le couplage de chacune de la pluralité de parties d'outil (702 ; 802 ; 902 ; 904 ; 906) ensemble pour résister à la séparation de l'une quelconque de la pluralité de parties d'outil (702 ; 802 ; 902 ; 904 ; 906) en réponse au dépôt de l'au moins une couche de matériau (318 ; 408 ; 508).

3. Procédé selon la revendication 2, dans lequel le couplage de chacune de la pluralité de parties d'outil (702 ; 802 ; 902 ; 904 ; 906) ensemble comporte le couplage de chacune de la pluralité de parties d'outil (702 ; 802 ; 902 ; 904 ; 906) ensemble à l'aide d'éléments de verrouillage (808) de la pluralité de parties d'outil (702 ; 802 ; 902 ; 904 ; 906), dans lequel, éventuellement, les éléments de verrouillage comportent des éléments en queue d'aronde.

4. Procédé selon une quelconque revendication précédente, dans lequel au moins l'une des parties d'outil comporte un premier matériau et a une poche ayant un second matériau qui est différent du premier matériau, dans lequel, éventuellement, le matériau différent de la poche a une limite d'élasticité en compression qui est supérieure à celle d'un matériau de la partie restante de l'au moins une partie d'outil.

5. Procédé selon une quelconque revendication précédente, dans lequel le dépôt d'au moins une couche de matériau (318 ; 408 ; 508) sur la surface de formation principale (402 ; 502 ; 712 ; 801 ; 901) comporte la commande d'un pistolet de pulvérisation à froid (410 ; 510 ; 716 ; 826 ; 908) pour le faire tourner afin de déposer l'au moins une couche de matériau (318 ; 408 ; 508) selon un angle qui est sensiblement perpendiculaire à un emplacement sur lequel l'au moins une couche de matériau (318 ; 408 ; 508) est en cours de dépôt.

6. Système pour former une structure de feuille (401 ; 501), comprenant :
un outil principal (308 ; 400 ; 500 ; 700 ; 800 ; 900) ayant une pluralité de parties d'outil (702 ; 802 ; 902 ; 904 ; 906) qui ont chacune une surface de formation de sorte que la surface de formation de chacune de la pluralité de parties d'outil (702 ; 802 ; 902 ; 904 ; 906) forme une surface de formation principale (402 ; 502 ; 712 ; 801 ; 901) correspondant à une forme souhaitée de la structure de feuille (401 ; 501) ;
un pistolet de pulvérisation à froid (410 ; 510 ; 716 ; 826 ; 908) conçu pour délivrer un gaz comportant des particules d'un matériau vers la surface de formation principale (402 ; 502 ; 712 ; 801 ; 901) à une vitesse suffisamment élevée pour amener les particules du matériau à se lier ensemble ; et
un dispositif pour séparer le matériau de la surface de formation principale (402 ; 502 ; 712 ; 801 ; 901) afin de créer la structure de feuille (401 ; 501),
**caractérisé en ce qu'**au moins une de la pluralité de parties d'outil a un canal de refroidissement (830) positionné à proximité de la surface de formation de l'au moins une partie d'outil et conçu pour éliminer la chaleur de la surface de formation et pour protéger thermiquement la surface de formation.

7. Système selon la revendication 6, dans lequel chacune de la pluralité de parties d'outil (702 ; 802 ; 902 ; 904 ; 906) est conçue pour être couplée aux autres afin de résister à la séparation de l'une quelconque de la pluralité de parties d'outil (702 ; 802 ; 902 ; 904 ; 906) en réponse au dépôt du matériau.

8. Système selon la revendication 7, dans lequel chacune de la pluralité de parties d'outil (702 ; 802 ; 902 ; 904 ; 906) comporte un élément de verrouillage (808) pouvant être utilisé pour coupler chacune de la pluralité de parties d'outil (702 ; 802 ; 902 ; 904 ; 906) aux autres, dans lequel, éventuellement, l'élément de verrouillage (808) comporte un élément en queue d'aronde.

9. Système selon l'une quelconque des revendications 6 à 8, dans lequel au moins une de la pluralité de parties d'outil (702 ; 802 ; 902 ; 904 ; 906) comporte une poche ayant un matériau différent d'une partie restante de l'au moins une partie d'outil.

10. Système selon la revendication 9, dans lequel le matériau différent de la poche a une limite d'élasticité en compression qui est supérieure à celle du matériau de la partie restante de l'au moins une partie d'outil.

11. Système selon l'une quelconque des revendications 6 à 10, dans lequel le pistolet de pulvérisation à froid (410 ; 510 ; 716 ; 826 ; 908) est conçu pour tourner afin de délivrer le gaz selon un angle qui est sensiblement perpendiculaire à un emplacement sur la surface de formation principale (402 ; 502 ; 712 ; 801 ; 901) sur laquelle le gaz est délivré.

12. Outil principal (308 ; 400 ; 500 ; 700 ; 800 ; 900) destiné à être utilisé pour former une structure de feuille en utilisant une technique de pulvérisation à froid, comprenant :
une première partie d'outil (804) ayant une première surface de formation et un premier élément de verrouillage (812) ; et
une seconde partie d'outil (806) ayant une seconde surface de formation et un second élément de verrouillage (816) de sorte que la première surface de formation et la seconde surface de formation forment au moins une partie d'une surface de formation principale (402 ; 502 ; 712 ; 801 ; 901) et sont conçues pour recevoir une pulvérisation à froid qui comporte un gaz et des particules d'un matériau à une vitesse suffisamment élevée pour amener les particules du matériau à se lier ensemble,
**caractérisé en ce qu'**au moins une de la première partie d'outil (804) ou de la seconde partie d'outil (806) comporte un canal de refroidissement (830) positionné à proximité d'au moins une de la première surface de formation ou de la seconde surface de formation et conçu pour transporter un liquide de refroidissement afin d'éliminer la chaleur de la surface de formation et de protéger thermiquement la surface de formation.

13. Outil principal selon la revendication 12, dans lequel le premier élément de verrouillage (812) et le second élément de verrouillage (816) comportent chacun un élément en queue d'aronde.

14. Outil principal selon la revendication 12 ou 13, dans lequel au moins une de la première partie d'outil (804) ou de la seconde partie d'outil (806) comporte une poche ayant un matériau différent d'une partie restante de l'au moins une de la première partie d'outil (804) ou de la seconde partie d'outil (806).
